# EUROPÄISCHE PATENTSCHRIFT

(11) **EP 1 566 413 B1**
(45) Veröffentlichungstag und Bekanntmachung des Hinweises auf die Patenterteilung: **19.04.2006**
(21) Anmeldenummer: 04003922.4
(22) Anmeldetag: 20.02.2004
(51) Int. Cl.: C09B 67/20, C09B 63/00, C09D 5/00

(54) **Verfahren zur Herstellung von homogenen, lagerstabilen Pasten, Farben, Lacken unter Mitverwendung ionischer Flüssigkeiten als Dispergierhilfsmittel**
Process for the preparation of homogeneous, storage-stable pastes, paints, laquers by using ionic liquids as dispersing aids
Procédé de préparation de pâtes, peintures, laques homogènes et stables au stockage en utilisant des liquides ioniques comme adjuvant de dispersion

(43) Veröffentlichungstag der Anmeldung: 24.08.2005
(73) Patentinhaber: Goldschmidt GmbH, 45127 Essen (DE)
(72) Erfinder: Lehmann, Kathrin, 51377 Leverkusen (DE); Silber, Stefan, Dr., 47804 Krefeld (DE); Weyershausen, Bernd, Dr., 45127 Essen (DE)

(56) Entgegenhaltungen:
- EP-A- 1 315 032
- EP-A- 1 315 038
- US-A- 6 048 388

## Beschreibung

Die Erfindung betrifft ein Verfahren zur Herstellung von Füllstoffen und/oder Pigmenten enthaltenden homogenen, lagerstabilen Pasten, Farben, Lacken unter Mitverwendung ionischer Flüssigkeiten als Dispergierhilfsmittel sowie Dispergierhilfsmittel enthaltende ionische Flüssigkeiten.

Die Verwendung von Dispergiermitteln, um Füllstoffe und Pigmente in flüssigen Medien zu verteilen, ist Stand der Technik und grundsätzlich müssen dabei folgende Aufgaben durch derartige Additive erfüllt werden:
- Leichtere Einarbeitung von Füllstoffen und Pigmenten, um kürzere Dispergierzeiten betrieblich zu garantieren oder die Nutzung einfacher Dispergieraggregate (Dissolver gegenüber Perlmühlendispergierung) zu gestatten,
- Reduktion der Viskosität von Pigmentpasten oder der von Farben und Lacken, wodurch die Herstellung besonders hoch gefüllter Pigmentpasten überhaupt erst ermöglicht wird,
- Entwicklung der optimalen Farbstärke bzw. bei deckenden Pigmenten des optimalen Deckvermögens,
- Verhinderung der Absetzneigung in Pigmentpasten bei mehrmonatiger Lagerung, bei Transport und bei extremer klimatischer Belastung,
- Vermeidung von Flockulation zur Herstellung reproduzierbarer Farbtöne, was besonders wichtig durch die Nutzung von Farbmischmaschinen zum Einfärben verschiedenartiger weißer Basisfarben und -lacke ist,
- Herstellung der Verträglichkeit mit einer Vielzahl von Auflackbindemitteln oder zudem aus ihnen hergestellten Farben und Lacken.

Die oben beschriebenen prinzipiellen Aufgaben eines Dispergiermittels oder solchen Hilfsstoffen sind dabei erst einmal unabhängig von der Frage zu erfüllen, in welchem flüssigen Medium ein Füllstoff oder Pigment dispergiert werden soll.

In der Art und Weise jedoch, mit welcher die gewünschte Wirkung erzielt wird, sind Dispergiermittel häufig sehr variabel. Es muß betrachtet werden, wie unabhängig ein Dispergiermittel von dem verwendeten Pigment arbeitet, also wie universell es in Bezug auf verschiedenartige Pigment- und Füllstoffoberflächen (anorganische oder organische, hydrophob oder hydrophil modifiziert usw.) wirkt.

Diese Aufgabe kann von modernen polymeren Dispergiermittelstrukturen häufig noch erfüllt werden. Beschrieben werden beispielsweise wasserlösliche, hydrophile Polyetherketten aufweisende Polyisocyanat-Additionsprodukte (EP-A-0 731 148), hydrophile Polyurethan-Polyharnstoffe (DE-A-44 16 336), Poly(meth)acrylate (US-A-3 980 602, WO-A-94/21701), sowie spezielle Polyester (WO-A-94/18260) oder auch Copolymere auf Basis vinylischer Monomere (Styrol, Vinylimidazol, u.a.) mit acrylatfunktionellen Monomeren (Acrylsäure, BuAc, HEA) wie in EP-B-0 311 157.

Neben störenden oder sogar toxischen Monomerrestanteilen ist bei diesen Systemen aber häufig keine universelle Verträglichkeit mit den typischen Bindemittelsystemen gegeben.

Bedingt durch Molgewicht, die Art der mitverwendeten Monomere oder die für die Wasserlöslichkeit erforderlichen langen Polyethylenoxidketten, sind die resultierenden Produkte häufig fest und können durch Neutralisation im Allgemeinen nur als 40 %ige wässrige Lösungen formuliert werden, wodurch der Anwender bei der Herstellung hochkonzentrierter Pasten eingeschränkt wird.

Ein weit größeres Problem stellt jedoch die Frage der Universalität des Dispergiermittels hinsichtlich verschiedenartiger Umgebungen dar.

Es ist grundsätzlich davon auszugehen, dass in wässrigen, hydrophilen Medien neben der sterischen Stabilisierung des Pigmentes durch das Dispergiermittel auch ein elektrostatischer Stabilisierungsbeitrag zu berücksichtigen ist, der bei geeigneter Wahl von funktionellen Gruppen so nicht bei der Dispergierung in lösemittelhaltiger Umgebung bzw. in anderen hydrophoben Medien wie UV-Systemen zur Verfügung steht.

In den zuletzt genannten Systemen wirken Dispergiermittel vorrangig durch sterische Stabilisierung. Es ist daher verständlich, dass Dispergiermittel eine gewisse Verträglichkeit mit dem sie umgebenden Medium haben müssen, damit die sterische Stabilisierung durch ausreichende Abstandshaltung der Pigmentteilchen gegeben ist. Diejenigen Anteile von Dispergiermitteln (Seitenketten in Polymeren bzw. Blockanteile in linearen Strukturen), die diese Stabilisierungsfunktion übernehmen, sind wegen der hohen Anforderungen an die verschiedenartigen Pigmente nicht auch noch in der Lage gleichermaßen wirksam in hydrophiler und hydrophober Umgebung sein zu können. Dies ist im Wesentlichen eine Frage der Löslichkeit und Verträglichkeit mit der umgebenden Matrix.

Es ist daher heute Stand der Technik, dass es wegen der vielfältigen Bemühungen zur Entwicklung von verschiedenartigen Dispergiermittelstrukturen einerseits für wässrige und wasserverdünnbare Lacke und Farben gekommen ist und andererseits Dispergiermittel für lösemittelhaltige bzw. UV-basierte Systeme vorhanden sind. Das heißt, es ist ein verschiedenartiges Farbpastensystem zum Einfärben der wässrigen bzw. lösemittelhaltigen Systeme auf Basis der vorgenannten Dispergiermittelgruppen entstanden Schema (1):

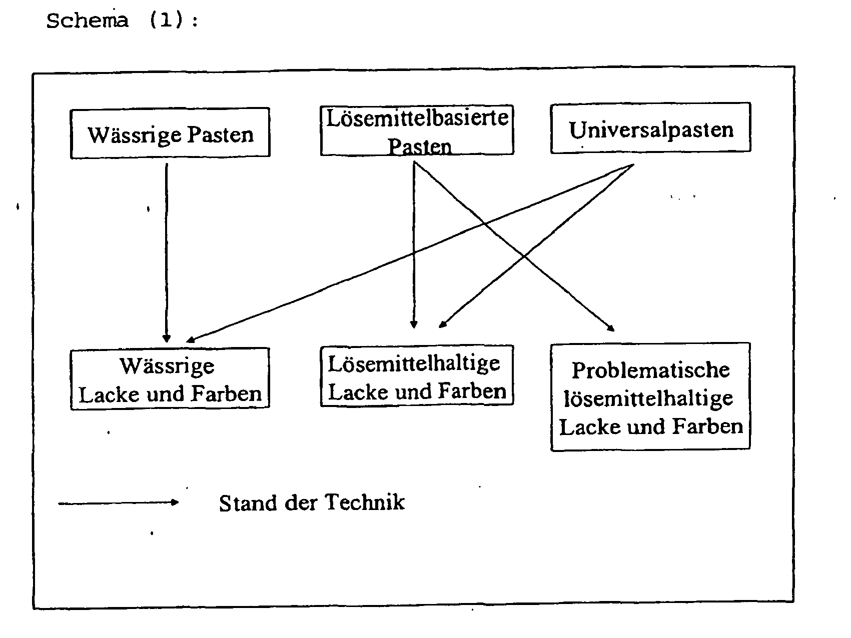

Bei dem damit verbundenen logistischen und betriebswirtschaftlichen Aufwand bei der Herstellung und Lagerung verschiedenartiger Pigmentpastensysteme für Farbmischmaschinen besteht daher ein hohes Einsparungspotential, dem sich einige Entwicklungen in der neueren Zeit bereits durch die Verwendung von so genannten Universaldispergiermitteln widmen.

So genannte Universaldispergiermittel werden für die Formulierung wässriger Pigmentpasten benutzt und sind z.B. auf Basis von Alkylphenolethoxylaten (J. Bielemann, PPCJ 3, 1995, 17; P. Quednau, ACT'98, Paper No. 29), Oleo-Block-ABC-Derivaten (H. Frommelius, VILF (Verband der Ingenieure für Lacke und Farben) Jahrestagung 2000, 41) oder styroloxidbasierten Polyetherstrukturen (6^{th} Nürnberg Congress, Creative Advances in Coatings Technology, April 2001, 481, Vincentz KG) formuliert. Allerdings erlauben die ökotoxikologisch bedenklichen Alkylphenolethoxylate (Journal of Surfactants and Detergents, Vol. 5, No. 1, (2002); Critical reviews in Toxigology, 26(3): 335-364, (1996); P. Schöberl, Tenside Surfactants Detergents 25, 1988, 2, 86; K. Fent, Swiss Federal Institute for Enviromental Science and Technology) genauso wenig wie die anderen Ideen zu Universaldispergiermitteln das erfolgreiche Einfärben aller vorhandenen Systeme.

Sie sind bei alleiniger Verwendung in den wasserbasierten Universalpasten (diese können bis zu 20 % Lösemittel z.B. als Humectant enthalten) nur in der Lage, wässrige Lacke und Farben, z.B. auf Basis von Acrylat-Dispersionen, Hybridbindemitteln oder PVAc-Terpolymerisaten zu tinten und ein eng begrenztes ausgewähltes Sortiment an lösemittelbasierten Farben und Lacken, wie z.B. von klassischen Alkydharzlacken oder PUalkydbasierten Systemen, einzufärben.

Völlig ungeeignet sind sogenannte Universalpasten jedoch um lösemittelhaltige Lacke und Farben beispielsweise auf PlioliteBasis (Styrol-Acrylate oder Styrol-Butadiene gelöst z.B. in Testbenzin oder Isoparaffinen) oder isoparbasierten Alkydharzen oder sogenannte High-Solid Alkyde einzufärben. Dafür kommen bisher lösemittelbasierte Pasten zum Einsatz.

Unter Berücksichtigung der Tatsache, dass in konventionellen Farbmischmaschinen 12 bis 20 Farbpasten verschiedener Pigmente enthalten sind, wird deutlich, dass die Anforderungen des Marktes nicht mehrere Farbmischmaschinen aufstellen zu müssen, wo jede nur zum Einfärben bestimmter Weißlacke und -farben geeignete Pasten enthält, verständlich.

Aufgabe der vorliegenden Erfindung war es, vorhandene wässrige Pigmentpastensysteme, die bis dato überhaupt nicht für das Einfärben lösemittelhaltiger Lacke geeignet waren oder solche Pigmentpasten, die zwar auf Basis eines Universaldispergiermittels formuliert sind, aber diesem Anspruch nur eingeschränkt gerecht werden, für die Nutzung in den vorgenannten problematischen lösemittelbasierten Lack- und Farbsystemen nutzbar zu machen.

Dabei soll sowohl die Mitverwendung in heutigen wässrigen Pasten oder Universalpastensystemen als auch die kombinierte Nutzung während des Einfärbens von Basisweißlacksystemen oder der Einsatz als Netzmittel in Basisweißlacken möglich sein, um so die heute für derartige problematische Systeme noch genutzten lösemittelhaltigen Pasten, die auch einer zusätzlichen Farbmischmaschine bedürfen, durch die alleinige Verwendung von wässrigen Pasten oder Universalpasten zu ersetzen.

Überraschenderweise wurde gefunden, dass durch die Verwendung von ionischen Flüssigkeiten in den wässrigen Pasten oder Universalpasten als Sekundärdispergiermittel oder die Verwendung in dem Weißlack oder die Verwendung als 3. Komponente während des Einfärbens (Paste + Weißlack + ionische Flüssigkeit) das vorgenannte Problem in solchen Systemen überwunden werden kann.

In der EP-A-1 315 038 sowie der EP-A-1 315 032 werden ionische Flüssigkeiten als Lösungsmittel für Bestandteile (coupler) von photographischen Formulierungen vorgeschlagen. Aufgrund ihres guten Lösevermögens ersetzen sie ganz oder teilweise konventionelle organische Lösungsmittel wodurch sie Schärfe und Farbtiefe der Photos verbessern.

In der US-A-6 048 388 werden bislang verwendete organische Lösungsmittel für Farbstoffe und andere Bestandteile bei der Herstellung von Tinten für Tintenstrahldruckern vollständig ersetzt durch ionische Flüssigkeiten. Die ionischen Flüssigkeiten übernehmen in den Formulierungen vollständig die Funktionen der organischen Lösungsmittel.

Ein Gegenstand der Erfindung ist daher ein Verfahren zum Einfärben von organischen Lösungsmitteln enthaltenden Pasten, Farben, Lacken, Überzügen, Beschichtungen, Anstrichsmitteln unter Verwendung von wässrigen Pigmentpasten enthaltend Wasser, Pigmente und Dispergiermittel, welches dadurch gekennzeichnet ist, dass als Dispergiermittel eine synergistische Kombination von
a) üblichen Primärdispergiermitteln und
b) ionischen Flüssigkeiten aus mindestens einem Kation der allgemeinen Formeln (1) bis (4) bestehen:

   R¹R²R³R⁴N^{⊕} (1)

   R¹R²N^{⊕}=CR³R⁴ (2)

   R¹R²R³R⁴P^{⊕} (3)

   R¹R²P^{⊕}=CR³R⁴ (4)
in denen
R¹, R², R³, R⁴ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁- bis C₃₀₋Alkylrest) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, - (O)C-O-, -NH-C (O) - , - (O) C-NH, - (CH₃)N-C (O) -, -(O)C-N(CH₃)-, -S(O₂)-O-, -O-S(O₂)-, -S (O₂) -NH-, -NH-S (O₂)-, -S (O₂)-N (CH₃)-, -N(CH₃)-S(O₂)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂ (mit R' gleich einem gegebenenfalls Doppelbindungen enthaltenden C₁- bis C₃₀-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß - (R⁵-O)ₙ-R⁶ bedeuten,
wobei
R⁵ ein 2 bis 4 Kohlenstoffatome enthaltender linearer oder verzweigter Kohlenwasserstoffrest,
n 1 bis 100, ist und
R⁶ Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten gegebenenfalls Doppelbindungen enthaltenden aliphatischen Kohlenwasserstoffrest mit 1 bis 30 Kohlenstoffatomen, einem cycloaliphatischen gegebenenfalls Doppelbindungen enthaltenden Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist,
als Sekundärdispergiermittel verwendet werden.

Ein weiterer Gegenstand der Erfindung sind wässrige, lösungsmittel- und pigmenthaltige Pasten, Farben, Lacke, Überzüge, Beschichtungen und Anstrichsmittel, hergestellt in erster Stufe nach an sich bekannten Verfahren und nachträglichem Zusatz von ionischen Flüssigkeiten wie oben beschrieben als Sekundärdispergiermittel in einer zur Entfaltung der synergistischen Wirkung ausreichenden Menge.

Ein weiterer Gegenstand der Erfindung sind wässrige, lösungsmittel- und pigmenthaltige Pasten, Farben, Lacke, Überzüge, Beschichtungen und Anstrichsmittel, hergestellt durch vorab Herstellung von synergistischen Mischungen aus
a) Primärdispergiermittel und ionischen Flüssigkeiten wie oben beschrieben und
b) Zugabe dieser Mischung zu mindestens einer der beiden Komponenten
   b1) Pigmentpasten,
   b2) Farben, Lacken, Überzügen, Beschichtungsstoffen, Anstrichsmitteln in einer zur Entfaltung der synergistischen Wirkung ausreichenden Menge.

Weitere Gegenstände der Erfindung sind gekennzeichnet durch den Inhalt der Ansprüche.

Die Verwendung dieser Dispergiermittel bewirkt eine eindeutige Verbesserung der Wirtschaftlichkeit und die Förderung ökotoxikologisch positiv bewerteter Technologien. Das Spektrum der Universalpastennutzbarkeit wird damit überproportional erweitert.

Das ist auch daraus erkenntlich, dass selbst bisher rein wässrige Pigmentpastensysteme oder solche, die zwar geringe Mengen Lösemittel enthalten, aber bisher nur zum Einfärben von lösungsmittelhaltigen Lacken und Farben geeignet waren, nun für das Einfärben von derartigen problematischen Lacken und Farben auf Lösemittelbasis nutzbar gemacht werden können.

Das unten stehende Schema (2) verdeutlicht den Hintergrund der erfindungsgemäßen Verwendung von ionischen Flüssigkeiten zum Einfärben von Lacken, Farben und Anstrichmitteln:

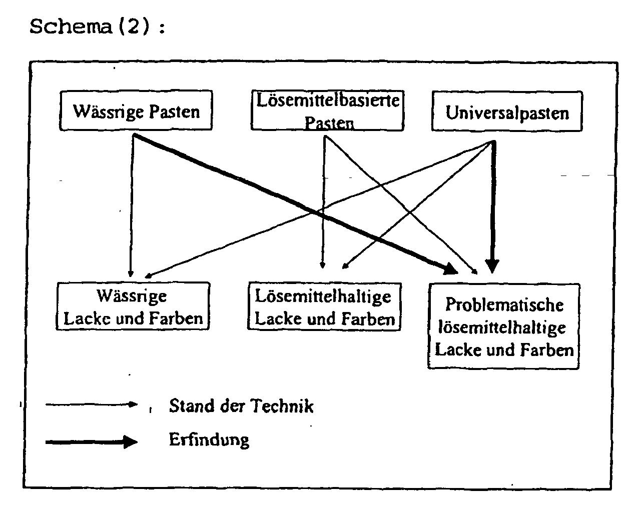

Als ionische Flüssigkeit ("ionic liquids") bezeichnet man allgemein bei niedrigen Temperaturen (< 100 °C) schmelzende Salze, die eine neuartige Klasse von Flüssigkeiten mit nichtmolekularem, ionischem Charakter darstellen. Im Gegensatz zu klassischen Salzschmelzen, die hochschmelzende, hochviskose und sehr korrosive Medien darstellen, sind ionische Flüssigkeiten bereits bei niedrigen Temperaturen flüssig und relativ niedrig viskos (K.R. Seddon J. Chem. Technol. Biotechnol. 1997, 68, 351-356).

Ionische Flüssigkeiten bestehen in den meisten Fällen aus Anionen wie zum Beispiel Halogeniden, Carboxylaten, Phosphaten, Sulfaten, Alkylsulfaten, Sulfonaten, Alkylsulfonaten, Tetrafluoroboraten oder Hexafluorophosphaten kombiniert mit zum Beispiel substituierten Ammonium-, Phosphonium-, Pyridinium- oder Imidazolium-Kationen, wobei die vorgenannten Anionen und Kationen eine kleine Auswahl aus der großen Zahl möglicher Anionen und Kationen darstellen und damit kein Anspruch auf Vollständigkeit erhoben oder gar eine Einschränkung vorgegeben werden soll.

Das erfindungsgemäße Verfahren zur Verwendung von ionischen Flüssigkeiten als sekundäres Dispergierhilfsmittel für Farben, Lacke, Beschichtungen und Anstrichfarben ist dadurch gekennzeichnet, dass eine synergistische Kombination aus a) üblichen Primärdispergiermitteln und b) ionischen Flüssigkeiten verwendet wird, wobei die erfindungsgemäßen ionischen Flüssigkeiten sich aus mindestens einer quartären Stickstoff und/oder Phosphorverbindung und mindestens einem Anion zusammensetzen und deren Schmelzpunkt unterhalb ca. + 250 °C, vorzugsweise unterhalb ca. + 150 °C, insbesondere unterhalb ca. + 100 °C liegt.

Die in dem erfindungsgemäßen Verfahren bevorzugt eingesetzten ionischen Flüssigkeiten bestehen aus mindestens einem Kation der allgemeinen Formeln:

R¹R²R³R⁴N^{⊕} (1)

R¹R²N^{⊕}=CR³R⁴ (2)

R¹R²R³R⁴P^{⊕} (3)

R¹R²P^{⊕}=CR³R⁴ (4)

in denen
R¹, R², R³, R⁴ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁ bis C₃₀-Alkylrest, insbesondere -CH₃) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O) -, - (O)C-O-, -NH-C (O) -, - (O)C-NH, -(C_{H3})N-C(O)-, - (O) C-N (CH₃) - , -S(O₂)-O-, -O-S(O₂)-, -S(O₂)-NH-, -NH-S(O₂)-, -S (O₂) -N(CH₃) -, -N (CH₃)-S (O₂) -, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂ (mit R' gleich einem gegebenenfalls Doppelbindungen enthaltenden C₁- bis C₃₀₋Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R⁵-O)ₙ-R⁶ bedeuten,
wobei
R⁵ ein 2 bis 4 Kohlenstoffatome enthaltender linearer oder verzweigter Kohlenwasserstoffrest,
n 1 bis 100, vorzugsweise 2 bis 60, ist und
R⁶ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen und
als Kationen kommen ferner Ionen in Betracht, die sich von gesättigten oder ungesättigten cyclischen Verbindungen sowie von aromatischen Verbindungen mit jeweils mindestens einem 3-bindigen Stickstoffatom in einem 4- bis 10-, vorzugsweise 5-bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (5), (6) und (7) beschreiben, wobei die heterocyclischen Ringe gegebenenfalls auch mehrere Hetereoatome enthalten können. 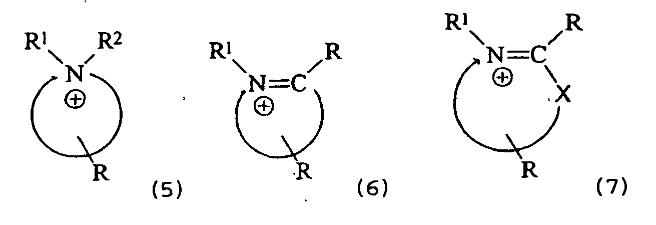 R¹ und R² besitzen dabei die vorgenannte Bedeutung,
R ist ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen.
Beispiele für cyclische Stickstoffverbindungen der vorgenannten Art sind Pyrrolidin, Dihydropyrrol, Pyrrol, Imidazolin, Oxazolin, Oxazol, Thiazolin, Thiazol, Isoxazol, Isothiazol, Indol, Carbazol, Piperidin, Pyridin, die isomeren Picoline und Lutidine, Chinolin und iso-Chinolin. Die cyclischen Stickstoffverbindungen der allgemeinen Formeln (5), (6) und (7) können unsubstituiert (R = H), einfach oder auch mehrfach durch den Rest R substituiert sein, wobei bei einer Mehrfachsubstitution durch R die einzelnen Reste R unterschiedlich sein können.
X ist ein Sauerstoffatom, ein Schwefelatom oder ein substituiertes Stickstoffatom (X = O, S, NR¹).

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4-bis 10-, vorzugsweise 5- bis 6-gliedrigen heterocyclischen Ring ableiten. Diese Verbindungen können sowohl an den Kohlenstoffatomen als auch an den Stickstoffatomen substituiert sein., Sie können ferner durch, gegebenenfalls substituierte, Benzolringe und/oder Cyclohexanringe unter Ausbildung mehrkerniger Strukturen aneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, Pyridazin, Pyrimidin, 2,3-, 2,5-und 2,6-Dimethylpyrazin, Cimolin, Phthalazin, Chinazolin, Phenazin und Piperazin. Insbesondere vom Imidazol und seinen Alkyl- und Phenylderivaten abgeleitete Kationen der allgemeinen Formel (8) haben sich als Bestandteil ionischer Flüssigkeit bewährt.

Als Kationen kommen ferner Ionen in Betracht, welche zwei Stickstoffatome enthalten und durch die allgemeine Formel (8) wiedergegeben sind 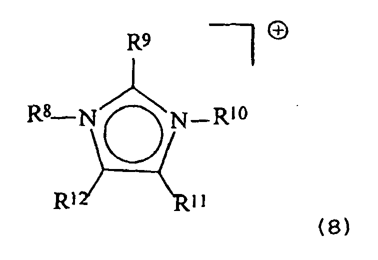 in denen
R⁸, R⁹, R¹⁰, R¹¹, R¹² gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁ bis C₃₀₋Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N (CH₃) -, -N (CH₃)-S(O₂)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ mit R' gleich einem gegebenenfalls Doppelbindungen enthaltenden C₁- bis C₃₀₋Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -(R⁵-O)ₙ-R⁶ bedeuten, wobei
R⁵ ein 2 bis 4 Kohlenstoffatome enthaltender Kohlenwasserstoffrest,
n 1 bis 100 ist und
R⁶ Wasserstoff, einen linearen oder verzweigten gegebenenfalls Doppelbindungen enthaltenden aliphatischen Kohlenwasserstoffrest mit 1 bis 30 Kohlenstoffatomen einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Die erfindungsgemäß bevorzugt eingesetzten ionischen Flüssigkeiten bestehen aus mindestens einem der vorgenannten Kationen kombiniert mit jeweils einem Anion. Bevorzugte Anionen werden ausgewählt aus der Gruppe - ohne Anspruch auf Vollständigkeit - der Halogenide, Bis(perfluoralkylsulfonyl)amide, Alkyl- und Aryltosylate, Perfluoralkyltosylate, Nitrate, Sulfate, Hydrogensulfate, Alkyl- und Arylsulfate, Polyethersulfate und -sulfonate, Perfluoralkylsulfate, Sulfonate, Alkyl- und Arylsulfonate, perfluorierte Alkyl- und Arylsulfonate, Alkyl- und Arylcarboxylate, Perfluoralkylcarboxylate, Perchlorate, Tetrarchloroaluminate, Saccharinate. Weiterhin sind Dicyanamid, Tetrafluoroborat, Hexafluorophosphat, Polyether-Phosphate und Phosphat bevorzugte Anionen.

Die Menge zugesetzter ionischer Flüssigkeit besitzt einen Massenanteil im Bereich von 0,1 bis 98 Gew.-%, vorzugsweise 0,1 bis 20 Gew.-%, besonders bevorzugt 0,3 bis 5 Gew.-% bezogen auf die wässrigen oder lösungsmittelhaltigen Pigment formulierungen, Lacke, Farben, Beschichtungsstoffe, Überzüge und Anstrichmittel.

Es ist weitgehend unkritisch, ob die ionischen Flüssigkeiten separat den vorzugsweise bereits die auf diesem Gebiet üblichen Primärdispergiermittel enthaltenden Pasten oder den Farben, Lacken, Überzügen, Beschichtungen, Anstrichsmitteln zugesetzt werden oder ob vorab synergistische Mischungen aus a) Primärdispergiermittel und ionischen Flüssigkeiten als Sekundärdispergiermitteln hergestellt und dies einer der beiden Komponenten (Pigmentpasten oder Farben/Lacken/Überzügen/Beschichtungsstoffen/Anstrichmitteln) in ausreichender Menge zugesetzt werden. Entscheidend ist letztlich, dass in der gebrauchsfertigen Mischung die beiden Komponenten (übliches Primärdispergiermittel + ionische Flüssigkeiten) in einer zur Entfaltung der synergistischen Wirkung ausreichenden Menge vorhanden sind.

Damit können sowohl bereits handelsübliche Produkte, insbesondere Pasten, als auch neue Systeme universalisiert werden.

Zum Nachweis des überraschenden Effektes wurden übliche ionische Flüssigkeiten in Kombination mit wässrigen Pasten, die auf Basis der Vergleichsbeispiele V1 bis V3 formuliert sind oder so genannte Universalpasten, enthaltend die Primärdispergiermittel V4 bis V7, verwendet, um verschiedenartige lösemittelhaltige Lacke der Pliolitefamilie einzufärben. Tabelle 1 charakterisiert die Primärdispergiermittel.

**Tabelle 1: Primärdispergiermittel als Vergleichsbeispiele:**

| | | | |
|---|---|---|---|
| V 1 | Acrylat-basiertes Dispergiermittel in Kombination mit Fettalkoholethoxylat | Dispergiermittel für Anreibung in wässriger Umgebung | Tego Dispers® 745 W |
| V 2 | Styrol-Maleinsäure-anhydrid-Copolymer | | Tego Dispers® 750 W |
| V 3 | Acrylat-basiertes Dispergiermittel | | Tego Dispers® 720 W |
| V 4 | Styroloxid-basierter Polyether, nicht-ionisch | | Tego Dispers® 650 |
| V 5 | phosphorylierter styroloxid-basierter Polyether | Dispergiermittel für die Formulierung von Universalpasten salpasten | Tego Dispers® 651 |
| V 6 | Nonylphenolethoxylat-9 EO, nichtionisch | | Berol® 09 (Akzo Nobel) (Akzo Nobel) |
| V 7 | Nonylphenolethoxylat-9 EO, anionisch modifiziert | | Berol® 733 (Akzo Nobel) |

Die vorgenannten Additive wurden dabei für die Herstellung der Pigmentpasten, aufgeführt in den Tabellen 2 und 3 mit den entsprechenden Rezepturen, zum Einsatz gebracht.

**Tabelle 2: Rezepturen für Universalpasten:**

| | Chromophtal® Violett GA (Fa. Ciba) | Bayferrox® 120 M (Fa. Bayer AG) | Heliogenblau® L 7072 D (Fa. Bayer AG) |
|---|---|---|---|
| Dispergieradditiv, 100 % Feststoff | 6,0 6,0 | 6,0 6,0 | 8,8 8,8 |
| Demineralisiertes Wasser | 63,9 | 21,9 | 46,1 |
| Netzmittel Tego® Dispers 652 | | 1,5 | |
| Entschäumer 830 Tego® Foamex 830 | 1,0 | 1,5 | 1,0 |
| Lösemittel 1,2 Propylenglykol | 9,0 | 9,0 | 9,0 |
| Pigment | 20,0 | 60,0 | 35,0 |
| Biocide Parmetol® K 40 (Fa. Schülke & Mayr) | 0,1 | 0,1 | 0,1 |

**Tabelle 3: Rezepturen für wässrige Pigmentpasten (wässrig, vollständig lösemittelfrei):**

| | Chromophtal® Violett GA (Fa. Ciba) | Bayferrox® 120 M (Fa. Bayer AG) |
|---|---|---|
| demineralisiertes Wasser | 59,9 | 32,9 |
| Dispergieradditiv, 100 % Feststoff | 9,0 | 6,0 |
| Entschäumer Tego® Foamex 830 | 1,0 | 1,0 |
| Pigment | 30,0 | 60,0 |
| Biocide Parmetol® K 40 (Fa. Schülke & Mayr) | 0,1 | 0,1 |

Die verfahrensweise zur Herstellung der oben aufgeführten Pigmentpasten erfolgt stets derartig wie im Folgenden angegeben:
a) Anorganisches Pigment einrühren, dann 1 h mit Glasperlen dispergieren (1 : 1 Volumen/z.B. mittels Schüttler Typ BA-S 20K der Fa. Lau GmbH),
b) Organisches Pigment einrühren, dann 2 h mit Glasperlen dispergieren (1 : 2 Volumen/z.B. mittels Schüttler Typ BA-S 20K der Fa. Lau GmbH).

Dabei sind die vorgenannten Pigmenttypen anorganisches Eisenoxidrot in Form des Bayferrox® 120 M (Fa. Bayer AG) und organisches Chromophtal® Violett GA (Fa. Ciba) und organisches Heliogenblau® L 7072 (Fa. Bayer AG) nur exemplarisch gewählt.

Zur Beschreibung der Pigmente, die prinzipiell in Pigmentpasten Einsatz finden und die durch die vorliegende Erfindung einem signifikant erweiterten Anwendungsbereich zugeführt werden, ist prinzipiell zwischen anorganischen und organischen Pigmenten zu unterscheiden und die Gruppe der Ruße zu benennen.

Als anorganische Pigmente sollen Titandioxid, unterschiedliche Modifikationen des Eisenoxids, Spinell-Pigmente und Ultramarin-Pigmente betrachtet werden (H. Endriß, Aktuelle anorganische Bunt-Pigmente, Vincentz, 1997).

Für die Gruppe der organischen Pigmente seien exemplarisch genannt (P.F. Gordon, P. Gregory, Organic Chemistry in Colour, Springer-Verlag, 1983; W. Herbst, K. Hunger, Industrial organic pigments, VCH, 1993):
a) Verschiedenartige Azopigmente wie β-Naphthol-Pigmente, Diazo-Pigmente, Naphthol AS-Pigmente, Benzimidazolon-Pigmente, Isoindolinone oder auch Azo-Metallkomplex-Pigmente;
b) polycyclische Pigmente wie z.B. Phthalocyanin-Pigmente, Quinacridone, Perylen-Pigmente, Dioxazine sowie Thioindigo-Typen;
c) Vielzahl andersartiger organischer Pigmente wie z.B. Diketopyrrolo-Pyrrole oder Quinophthalone.

Darüber hinaus sind wasserbasierte Pasten verschiedener Rußtypen durch die kombinierte Verwendung von ionischen Flüssigkeiten geeignet Pliolite-Systeme oder andersartige lösemittelbasierte Lacke und Farben einzufärben.

Für die Gruppe der Füllstoffe sind z.B. Kreide, Talkum, Kaoline und andere silikatische Füllstoffe zu benennen.

Als ionische Flüssigkeiten im Sinne der erfindungsgemäßen Verwendung wurden die Verbindungen IL 1 bis IL 25 eingesetzt, wobei diese nur als Beispiele anzusehen sind und die Erfindung nicht auf sie beschränkt ist. Eine chemische Charakterisierung der ionischen Flüssigkeiten findet sich in Tabelle 4.

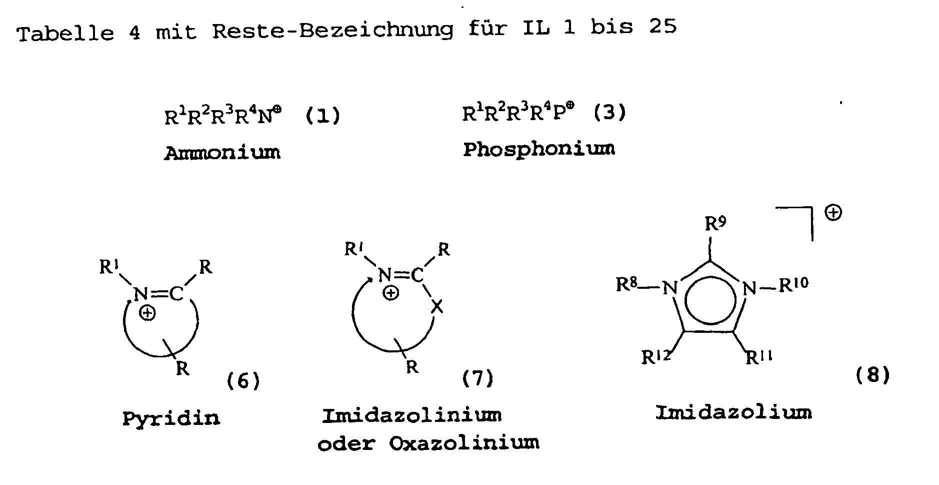

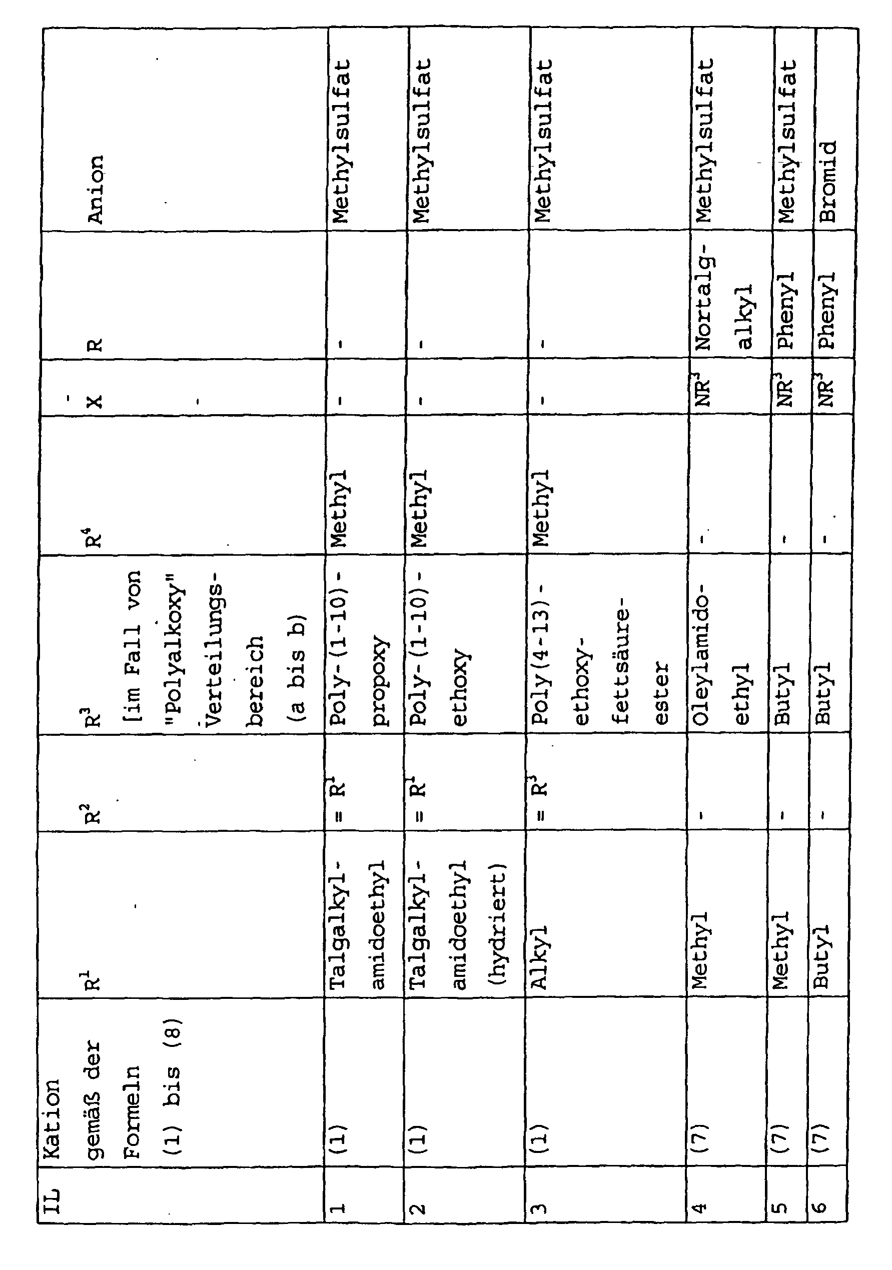

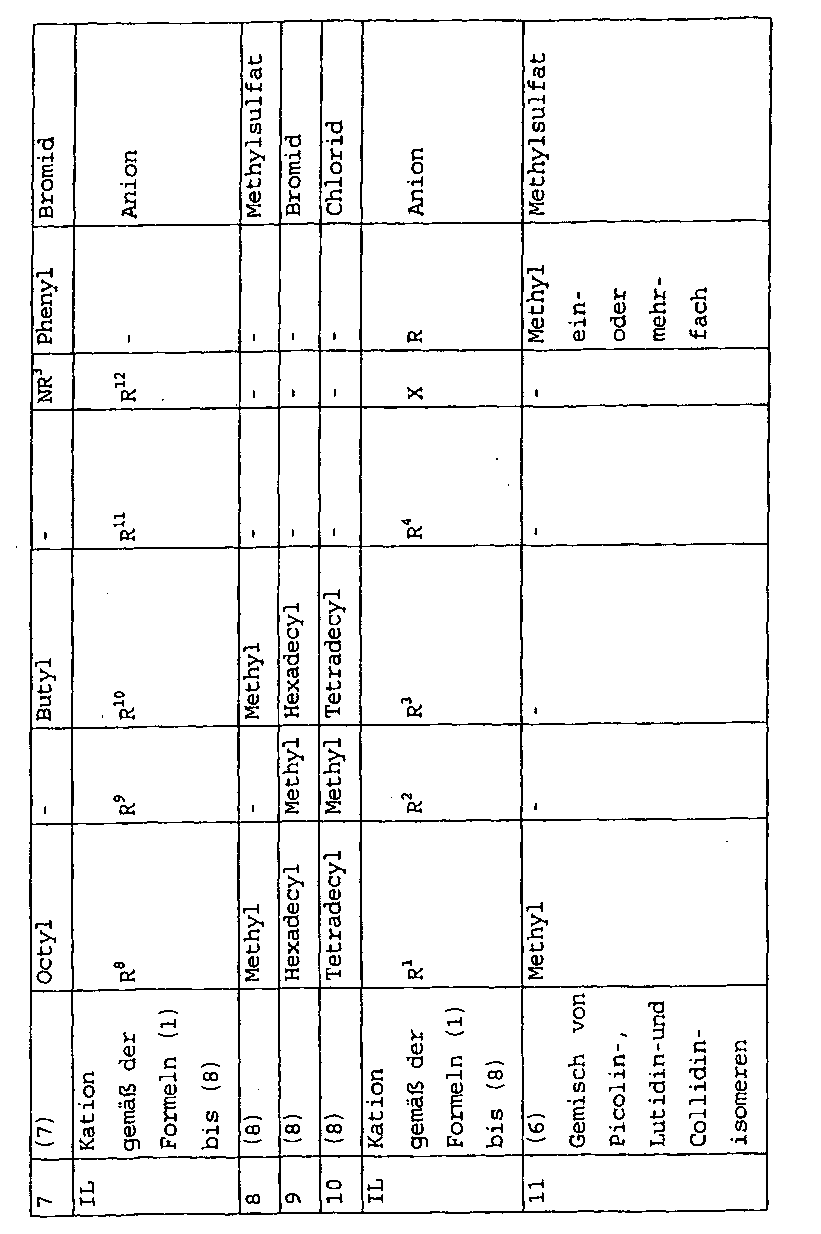

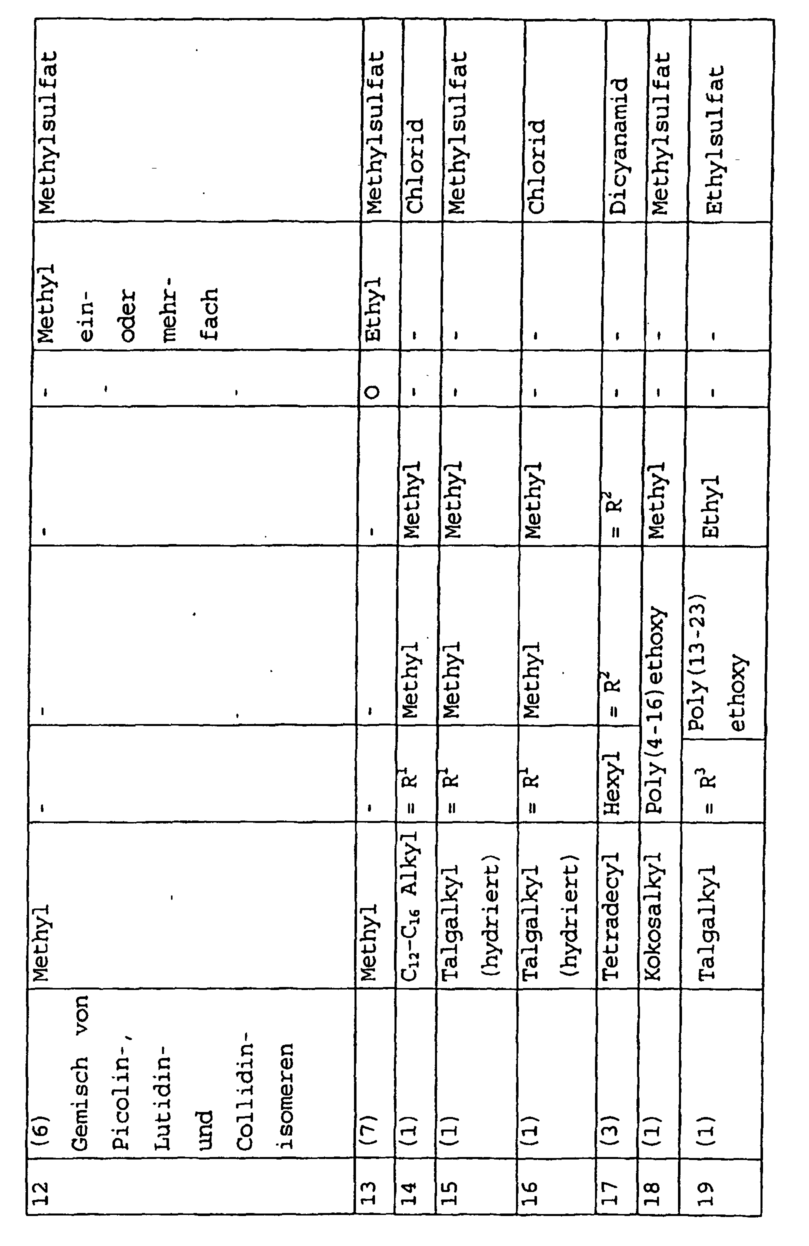

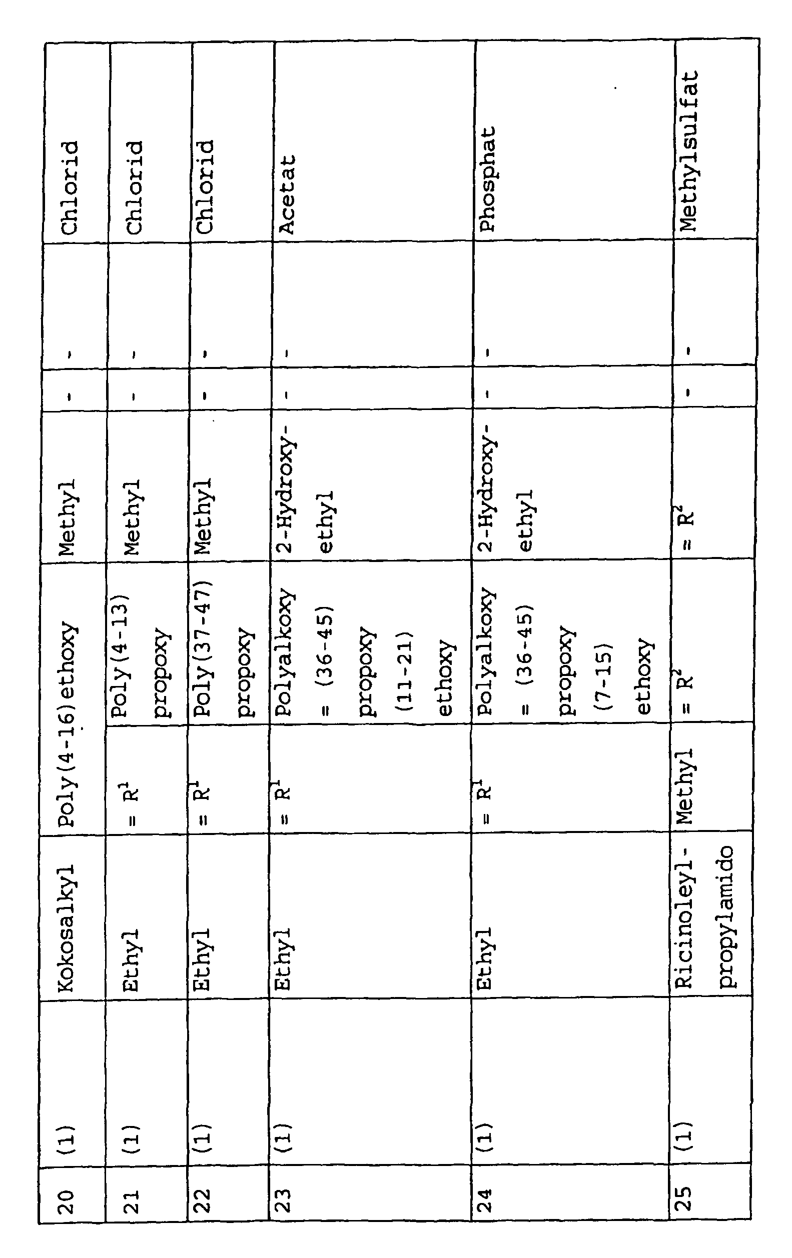

Zur Prüfung der technischen Eigenschaften der erfindungsgemäß beanspruchten ionischen Flüssigkeiten werden diese einer Mischung bestehend aus problematischem Weißlack auf Pliolitebasis und Buntpigmentpaste (wässrig oder universell) zugesetzt und mittels folgender Tests bewertet.

### Rub-out-Test:

Um insbesondere das vertikale Ausschwimmen von Pigmenten in Lackfilmen sichtbar und meßbar zu machen, kann man den sogenannten Rub-out-Test durchführen. Dazu reibt man den noch feuchten, aber bereits angezogenen Lackfilm mit dem Finger oder einem Pinsel. Haben sich die Pigmente entmischt oder liegen sie stark flockuliert vor, so wird durch den mechanischen Vorgang des Reibens wieder eine homogene Verteilung erzwungen. Es entsteht der angestrebte Farbton des homogenen Gemisches. An der Farbdifferenz zum ungeriebenen Film erkennt man das Ausmaß der Störung. Man kann sowohl einen positiven als auch einen negativen Rub-out-Effekt erhalten. Ein positiver Rub-out-Effekt bedeutet, dass die Farbstärke des ungeriebenen Films niedriger als die des geriebenen Films ist, was z. B. auf das Aufschwimmen von Weißpigment zurückgeführt werden kann. Bei einem negativen Rub-out-Effekt ist es umgekehrt.

### Bestimmung der farbmetrischen Werte:

Die auf Kartonkarten (Lineta® Karte) aufgezogenen pigmentierten Lacke und Farben werden mittels eines Farbmessgerätes (Typ X-Rite, SP 62-162, Lichtart D65/10, Firma X-Rite) in Form von L*a*b*-Werten (Helligkeit, Farbstich auf der Rot/Grün-Skala, Farbstich auf der Gelb/Blau-Skala) bestimmt.

Wird eine Pigmentpaste benutzt, die nicht für den zu colorierenden Weißlack geeignet ist, tritt spontane Flockulation auf, obwohl die Pigmentpaste in anderen Weißlacken eine völlig unproblematische, farbtiefe Einfärbung mit dem in der Pigmentpaste enthaltenem Buntpigment zulässt. Spontane Flockulation kann auch nicht dadurch überwunden werden, dass weitere Mengen an Buntpigmentpaste zugegeben werden; es tritt keine Farbvertiefung ein. Beim Versuch die Pigmente in der leicht angetrockneten Farbe auszureiben, resultiert im Allgemeinen ein gravierender Rub-out-Unterschied zwischen geriebener und ungeriebener Fläche, der unerwünscht ist. Mit der vorliegenden Erfindung ist also garantiert, dass wässrige Pigmentpasten oder Universalpasten nun auch schwierige lösemittelhaltige Lacke wie z.B. Pliolitesysteme farbtief einfärben. Der Beitrag der ionischen Flüssigkeiten als Sekundärdispergiermittel die Flockulationsneigung zu unterdrücken, kann an deutlich niedrigeren Helligkeits- (L*-Werte) und Rub-out-Werten (ΔE) eindrucksvoll ersichtlich gemacht werden.

Zum Nachweis des überraschenden Effektes wurden deshalb 25 g Pliolite-Weißlack mit 0,5 g organischer oder 1,0 g anorganischer Pigmentpaste unter Verwendung eines Gummiwischers versucht zu homogenisieren. Durch Zugabe von 0,3 g ionischer Flüssigkeit und die Homogenisierung kann nach Aufziehen mit einem 150 *µ*m Rakel auf Kontrastkarten der erfindungsgemäß beanspruchte Effekt beobachtet werden. Der Rub-out wird nach 4 bis 6 Minuten durchgeführt. Die Verwendung von 0,3 g ionischer Flüssigkeit ist dabei eine verwendete Standardkonzentration,
wobei konzentrationsabhängige Einflüsse den erfindungsgemäßen Anspruch unterstützen und daher nicht auf die vorhergenannte Konzentration beschränkt sind.

Für die Beobachtung des erfindungsgemäßen Effektes wurden vier handelsübliche Lacksysteme eingesetzt und drei verschiedene Buntpigmente mit dem Universaldispergiermittel V 5 zu Pasten formuliert und zum Einfärben benutzt.

Eine Charakterisierung der entsprechenden Lacke findet sich in Tabelle 5.

**Tabelle 5: Problematische lösemittelhaltige Lacksysteme:**

| Lacksystem | Chemische Basis | Lösemittel | Erscheinung |
|---|---|---|---|
| Trugnard/F | Styrol-Acrylate bzw. Styrol-Butadiene gelöst in einem Lösemittel, Alkydharzähnliche Eigenschaften | Testbenzin | matt |
| ICI/UK | | Testbenzin | glänzend |
| Stromshield 1 /UK | | Testbenzin | matt |
| Stromshield 2 /UK | | Isoparaffin | matt |

Werden Pasten auf Basis von V 5 für die Herstellung gemäß der Pastenformulierungen genannt in Tabelle 2 verwendet, so resultieren für die vier vorgenannten Lacksysteme die in der unten stehenden Tabelle 6 genannten Rub-out-Werte, die verdeutlichen, dass keine der drei verwendeten Farbpasten eine zufriedenstellende Einfärbung auch nur eines der Lacksysteme zulässt. Die Werte sind also eine Veranschaulichung der Problematik, die in Abb. 1 schematisch dargestellt wurde.

**Tabelle 6: Einfärbung problematischer lösemittelhaltiger Lacke mit resultierenden ΔE-Werten (Pasten auf Basis von V 5):**

| | Bayferrox® 120 M (Fa. Bayer AG) | Chromophtal® Violett GA (Fa. Ciba) | Heliogenblau® L 7072 D (Fa. BASF AG) |
|---|---|---|---|
| Trugnard UK | 28,52 | 27,91 | 25,71 |
| ICI/F | 8,93 | 37,87 | 34,30 |
| Stromshield 1 | 9,14 | 11,76 | |
| Stromshield 2 | 27,67 | 33,73 | |

Zur Beobachtung des erfindungsgemäß beanspruchten Effektes können die Ergebnisse in Tabelle 7 für Chromophtal® Violett GA und in Tabelle 8 für Bayferrox® 120 M herangezogen werden.

**Tabelle 7: Chromophtal® Violett GA (Fa. Ciba) + ionische Flüssigkeiten/Handmixing in Stromshield 2:**

| Pasten auf Basis der Primärdispergieradditive | | Pliolite + Paste | | Pliolite + Paste | | Pliolite + Paste | | Pliolite + Paste | |
|---|---|---|---|---|---|---|---|---|---|
| | | ohne IL | | IL 4 | | IL 15 | | IL 21 | |
| | | L* | dE | L* | dE | L* | dE | L* | dE |
| V 1 | 745 W | 68,04 | 32,98 | 51,25 | 6,39 | 49,23 | 5,96 | 62,12 | 16,20 |
| V 2 | 750 W | 78,63 | 31,51 | 54,60 | 5,08 | 70,30 | 20,69 | 63,73 | 18,01 |
| V 3 | 720 W | 80,48 | 9,61 | 55,19 | 10,04 | 51,12 | 8,54 | 74,89 | 10,18 |
| V 4 | 650 | 51,46 | 7,94 | 49,97 | 6,28 | 48,47 | 4,89 | 62,68 | 14,57 |
| V 5 | 651 | 67,42 | 33,29 | 54,50 | 13,61 | 56,96 | 19,76 | 69,24 | 29,14 |
| V 6 | Herol 09 | 74,95 | 26,58 | 59,39 | 2,08 | 59,48 | 2,60 | 69,49 | 21,66 |
| V 7 | Berol 733 | 70,86 | 38,58 | 52,39 | 9,32 | 54,5 | 15,89 | 64,44 | 20,95 |

**Tabelle 8: Bayferrox® 120 M (Fa. Bayer AG) + ionische Flüssigkeiten/Handmixing in Stromshield 2:**

| Pasten auf Basis der Primär dispergieradditive | | Pliolite + Paste | | Pliolite + Paste | | Pliolite + Paste | | Pliolite + Paste | |
|---|---|---|---|---|---|---|---|---|---|
| | | ohne IL | | IL 4 | | IL 15 | | IL 21 | |
| | | L* | dE | L* | dE | L* | dE | L* | dE |
| V 1 | 745 W | 77,33 | 29,31 | 59,24 | 1,60 | 58,28 | 0,67 | 65,01 | 10,94 |
| V 2 | 750 W | 78,34 | 26,97 | 59,79 | 3,07 | 64,93 | 10,44 | 70,91 | 17,28 |
| V 3 | 720 W | keine Paste herstellbar | | | | | | | |
| V 4 | 650 | 75,28 | 27,96 | 58,70 | 2,92 | 58,85 | 2,32 | 70,10 | 19,24 |
| V 5 | 651 | 78,55 | 30,61 | 58,85 | 3,44 | 59,43 | 3,00 | 64,70 | 12,49 |
| V 6 | Berol 09 | 74,95 | 26,58 | 59,39 | 2,08 | 59,48 | 2,60 | 69,49 | 21,66 |
| V 7 | Berol 733 | keine Paste herstellbar | | | | | | | |

Unabhängig, ob für die Einfärbung wässriger Pasten auf Basis der Primärdispergieradditive V 1 bis V 3 verwendet werden oder Universaldispergiermittel auf Basis von V 4 bis V 7 für die Pasten Einsatz fanden, erlaubt keine der Violett- oder Rotpasten das Einfärben des Stromshieldsystems 2 ohne Probleme. Farbtiefe Aufzüge (niedrige L*-Werte) ohne signifikante Rubouts (ΔE << 10) werden erst durch die Mitverwendung der drei verwendeten ionischen Flüssigkeiten (IL 4, IL 15 und IL 21) möglich.

Die Tabellen 9 und 10 führen die Ergebnisse der Violett- bzw. Rotpasten auf, die das Universaldispergieradditiv V 5 als Primärdispergieradditiv enthalten und dann Verwendung in dem kritischen Lacksystem Stromshield 2 zum Einfärben finden.

**Tabelle 9: Primärdispergiermittel V 5 für Chromophtal® Violett GA-Paste (Fa. Ciba) mit Stromshield 2 ohne und mit ionischen Flüssigkeiten:**

| | L | a | b | dE |
|---|---|---|---|---|
| ohne IL | 71,16 | 2,72 | -13,84 | 33,73 |
| IL 1 | 54,17 | 15,84 | -32,85 | 4,53 |
| IL 2 | 54,24 | 14,99 | -32,01 | 5,04 |
| IL 3 | 54,39 | 15,50 | -32,35 | 5,16 |
| IL 4 | 54,00 | 16,20 | -32,82 | 5,93 |
| IL 5 | 62,68 | 7,46 | -22;07 | 21,05 |
| IL 6 | 61,80 | 7,82 | -23,22 | 14,22 |
| IL 7 | 62,22 | 7,80 | -23,10 | 15,34 |
| IL 8 | 57,81 | 12,88 | -28,69 | 12,80 |
| IL 9 | 67,91 | 6,26 | -19,01 | 25,83 |
| IL 10 | 69,43 | 6,19 | -19,36 | 23,72 |
| IL 11 | 64,02 | 8,89 | -22,83 | 20,26 |
| IL 12 | 71,36 | 4,59 | -15,83 | 30,24 |
| IL 13 | 62,53 | 9,71 | -24,43 | 18,52 |
| IL 14 | 61,65 | 8,26 | -23,8 | 13,25 |
| IL 15 | 55,22 | 14,28 | -31,18 | 7,99 |
| IL 16 | 55,06 | 12,29 | -28,82 | 11,00 |
| IL 17 | 62,50 | 9,37 | -24,29 | 15,45 |
| IL 18 | 68,16 | 3,93 | -16,54 | 24,86 |
| IL 19 | 70,10 | 3,83 | -15,90 | 25,83 |
| IL 20 | 72,66 | 3,12 | -14,15 | 29,04 |
| IL 21 | 69,24 | 1,80 | -14,24 | 29,14 |
| IL 22 | 68,37 | 1,94 | -15,03 | 28,74 |
| IL 23 | 65,29 | 3,27 | -17,28 | 25,33 |
| IL 24 | 68,81 | 2,01 | -14,99 | 28,67 |
| IL 25 | 60,95 | 7,85 | -23,06 | 17,47 |

**Tabelle 10: Primärdispergiermittel V 5 für Bayferrox® 120 M-Pasten (Fa. Bayer AG) mit Stromshield 2 ohne und mit ionsichen Flüssigkeiten:**

| | L | a | b | dE |
|---|---|---|---|---|
| ohne IL | 76,15 | 5,16 | -1,74 | 27,67 |
| IL 1 | 60,27 | 21,00 | 7,78 | 3,74 |
| IL 2 | 60,24 | 20,91 | 7,73 | 4,07 |
| IL 3 | 59,75 | 21,52 | 8,40 | 2,60 |
| IL 4 | 60,01 | 21,46 | 8,41 | 3,30 |
| IL 5 | 66,29 | 13,63 | 1,58 | 16,08 |
| IL 6 | 61,72 | 18,77 | 5,16 | 9,10 |
| IL 7 | 62,19 | 18,08 | 4,85 | 7,92 |
| IL 8 | 67,74 | 12,51 | 0,52 | 16,47 |
| IL 9 | 63,72 | 17,53 | 4,36 | 8,48 |
| IL 10 | 63,43 | 16,65 | 3,51 | 8,36 |
| IL 11 | 68,48 | 11,89 | 2,02 | 16,48 |
| IL 12 | 69,01 | 12,78 | 2,11 | 17,39 |
| IL 13 | 65,07 | 14,86 | 2,23 | 11,39 |
| IL 14 | 61,15 | 20,1 | 6,47 | 4,88 |
| IL 15 | 59,19 | 21,91 | 8,96 | 1,97 |
| IL 16 | 59,38 | 21,53 | 8,57 | 3,37 |
| IL 17 | 73,38 | 7,61 | -0,63 | 23,22 |
| IL 18 | 72,07 | 9,22 | 0,03 | 21,91 |
| IL 19 | 73,05 | 9,19 | 0,57 | 21,99 |
| IL 20 | 73,13 | 9,04 | 0,07 | 23,78 |
| IL 21 | 64,70 | 16,06 | 3,09 | 12,49 |
| IL 22 | 63,97 | 17,05 | 4,13 | 11,63 |
| IL 23 | 62,53 | 18,21 | 4,91 | 10,89 |
| IL 24 | 62,88 | 17,76 | 3,78 | 11,20 |
| IL 25 | 63,75 | 16,37 | 3,46 | 10,20 |

Die Nullproben beider Pigmentpasten mit hohen L*-Werten und dramatischen ΔE-Werten von mehr als 30 Einheiten, lassen es fast unwahrscheinlich erscheinen, dass dieses kritische Lacksystem durch wasserbasierte Pasten überhaupt einzufärben sein soll.

Umso erstaunlicher ist der durch die ionischen Flüssigkeiten zu erreichende erfindungsgemäß beanspruchte Effekt, der in jedem Fall an einer Erniedrigung des L*-Wertes und des ΔE-Wertes erkennbar wird.

Insbesondere sind die ionischen Flüssigkeiten IL 1,2,3,4 und IL 15 dazu geeignet, die Flockulation der violetten wässrigen Pigmentpaste in dem verwendeten lösemittelhaltigen Lack so stark zu verhindern, dass die Systeme technisch tatsächlich realisierbar sind.

Für die Rotpaste stellt sich die Situation noch unkomplizierter dar, da nicht nur die für Chrorriophtal® Violett GA geeignete ionischen Flüssigkeiten, sondern weitere ionische Flüssigkeiten einen technisch höchst relevanten Effekt zeigen.

## Patentansprüche

1. Verfahren zum Einfärben von organischen Lösungsmitteln enthaltenden Pasten, Farben, Lacken, Überzügen, Beschichtungen, Anstrichsmitteln unter Verwendung von wässrigen Pigmentpasten enthaltend Wasser, Pigmente und Dispergiermittel, **dadurch gekennzeichnet, dass** als Dispergiermittel eine synergistische Kombination von
a) üblichen Primärdispergiermitteln und
b) ionischen Flüssigkeiten aus mindestens einem Kation der allgemeinen Formeln (1) bis (4) bestehen:
R¹R²R³R⁴N^{⊕} (1)
R¹R²N^{⊕}=CR³R⁴ (2)
R¹R²R³R⁴P^{⊕} (3)
R¹R²P^{⊕}=CR³R⁴ (4)
in denen
R¹, R², R³, R⁴ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁- bis C₃₀₋Alkylrest) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, - (CH₃) N-C (O) -, -(O)C-N(CH₃)-, -S(O₂)-O-, -O-S(O₂)-, -S(O₂) -NH-, -NH-S (O₂) -, -S (O₂) -N (CH₃)-, -N(CH₃)-S(O₂)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R`, N(R`)₂ (mit R' gleich einem gegebenenfalls Doppelbindungen enthaltenden C₁- bis C₃₀-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß - (R⁵-O)ₙ-R⁶ bedeuten,
wobei
R⁵ ein 2 bis 4 Kohlenstoffatome enthaltender linearer oder verzweigter Kohlenwasserstoffrest,
n 1 bis 100, ist und
R⁶ Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten gegebenenfalls Doppelbindungen enthaltenden aliphatischen Kohlenwasserstoffrest mit 1 bis 30 Kohlenstoffatomen, einem cycloaliphatischen gegebenenfalls Doppelbindungen enthaltenden Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist,
als Sekundärdispergiermittel verwendet werden.

2. Verfahren gemäß Anspruch 1, **dadurch gekennzeichnet, dass** Kationen verwendet werden, die sich von gesättigten oder ungesättigten cyclischen Verbindungen sowie von aromatischen Verbindungen mit jeweils mindestens einem dreibindigen Stickstoffatom in einem 4- bis 10-gliedrigen heterocyclischen Ring der allgemeinen Formeln (5), (6) und (7) ableiten, wobei die heterocyclischen Ringe gegebenenfalls weitere Hetereoatome enthalten können 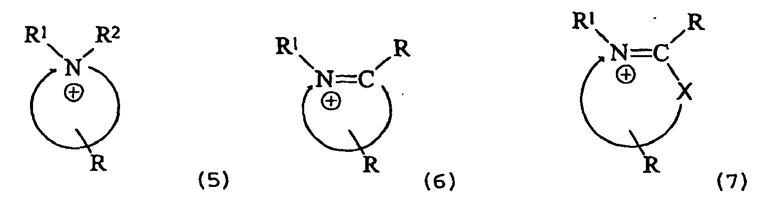 und worin
R¹ und R² die vorgenannte Bedeutung haben,
R ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen und
X ein Sauerstoffatom, ein Schwefelatom oder ein substituiertes Stickstoffatom (X = O, S, NR¹) sein kann.

3. Verfahren gemäß mindestens einem der Ansprüche 1 bis 2, **dadurch gekennzeichnet, dass** Kationen der allgemeinen Formel (8) mitverwendet werden 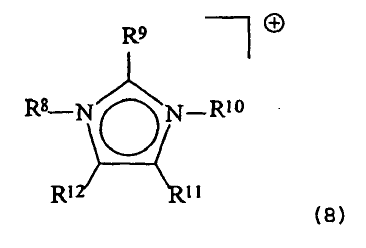 in denen
R⁸, R⁹, R¹⁰, R¹¹, R¹² gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁- bis C₃₀-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-_{,} -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ (mit R' gleich einem gegebenenfalls Doppelbindungen enthaltenden C₁- bis C₃₀-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus (R⁵-O)ₙ-R⁶ bedeuten,
wobei
R⁵ ein 2 bis 4 Kohlenstoffatome enthaltender Kohlenwasserstoffrest,
n 1 bis 100 ist und
R⁶ Wasserstoff, einen linearen oder verzweigten gegebenenfalls Doppelbindungen enthaltenden aliphatischen Kohlenwasserstoffrest mit 1 bis 30 Kohlenstoffatomen einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

4. Verfahren gemäß mindestens einem der Ansprüche 1 bis 3, **dadurch gekennzeichnet, dass** die in dem erfindungsgemäßen Verfahren eingesetzten ionischen Flüssigkeiten ein Anion, ausgewählt aus der Gruppe der Halogenide, Bis(perfluoralkylsulfonyl)amide, Alkyl- und Aryltosylate, Perfluoralkyltosylate, Nitrate, Sulfate, Hydrogensulfate, Alkyl- und Arylsulfate, Polyethersulfate und -sulfonate, Perfluoralkylsulfate, Sulfonate, Alkyl- und Arylsulfonate, perfluorierte Alkyl- und Arylsulfonate, Alkyl- und Arylcarboxylate, Perfluoralkylcarboxylate, Perchlorate, Tetrarchloroaluminate, Saccharinate enthalten, vorzugsweise Anionen der Verbindungen Dicyanamid, Tetrafluoroborat, Hexafluorophosphat, Phosphat und Polyetherphosphate.

5. Verfahren gemäß mindestens einem der Ansprüche 1 bis 4, **dadurch gekennzeichnet, dass** die ionischen Flüssigkeiten ein Kation ausgewählt aus der Gruppe (1) und/oder (7) und ein Alkylsulfat als Anion enthalten.

6. Verfahren gemäß mindestens einem der Ansprüche 1 bis 5, **dadurch gekennzeichnet, dass** Mischungen aus zwei oder mehreren ionischen Flüssigkeiten bestehend aus Kationen der allgemeinen Formeln (1) bis (8) jeweils kombiniert mit mindestens einem Anion eingesetzt werden.

7. Verfahren gemäß mindestens einem der Ansprüche 1 bis 6, **dadurch gekennzeichnet, dass** die Menge zugesetzter ionischer Flüssigkeit, im Bereich von 0,1 bis 98 Gew.-%, vorzugweise 0,1 bis 20 Gew.-%, besonders bevorzugt 0,3 bis 5 Gew.-%, bezogen auf die Gesamtformulierung, beträgt.

8. Wässrige, lösungsmittel- und pigment haltige Pasten, Farben, Lacke, Überzüge, Beschichtungen und Anstrichsmittel, hergestellt in erster Stufe nach an sich bekannten Verfahren und nachträglichem Zusatz von ionischen Flüssigkeiten nach Anspruch 1 als Sekundärdispergiermittel in einer zur Entfaltung der synergistischen Wirkung ausreichenden Menge.

9. Wässrige, lösungsmittel- und pigment haltige Pasten, Farben, Lacke, Überzüge, Beschichtungen und Anstrichsmittel, hergestellt durch vorab Herstellung von synergistischen Mischungen aus
a) Primärdispergiermittel und ionischen Flüssigkeiten nach Anspruch 1 und
b) Zugabe dieser Mischung zu mindestens einer der beiden Komponenten
b1) Pigmentpasten,
b2) Farben, Lacken, Überzügen, Beschichtungsstoffen, Anstrichsmitteln in einer zur Entfaltung der synergistischen Wirkung ausreichenden Menge.

## Claims

1. Process for coloring pastes, inks, paints, coverings, coatings or coating materials comprising organic solvents using aqueous pigment pastes comprising water, pigments and dispersants **characterized in that** a synergistic combination of
a) conventional primary dispersants and
b) ionic liquids composed of at least one cation of the general formulae (1) to (4):
R¹R²R³R⁴N^{⊕} (1)
R¹R²N^{⊕}=CR³R⁴ (2)
R¹R²R³R⁴P^{⊕} ) (3
R¹R²P^{⊕}=CR³R⁴ (4)
in which
R¹, R², R³, R⁴ are identical or different and are hydrogen, a linear or branched aliphatic hydrocarbon radical with or without double bonds and having 1 to 30 carbon atoms, a cycloaliphatic hydrocarbon radical with or without double bonds and having 5 to 40 carbon atoms, an aromatic hydrocarbon radical having 6 to 40 carbon atoms, an alkylaryl radical having 7 to 40 carbon atoms, a linear or branched aliphatic hydrocarbon radical with or without double bonds, interrupted by one or more heteroatoms (oxygen, NH, NR' where R' is a C₁ to C₃₀ alkyl radical with or without double bonds) and having 2 to 30 carbon atoms, a linear or branched aliphatic hydrocarbon radical with or without double bonds, interrupted by one or more functionalities selected from the group consisting of -O-C(O)-, -(O)C-O-, -NH-C(O)-, -(O)C-NH, -(CH₃)N-C(O)-, -(O)C-N(CH₃)-, -S(O₂)-O-, -O-S(O₂)-**,** -S(O₂)-NH-, -NH-S(O₂)-, -S(O₂)-N(CH₃)-, and -N(CH₃)-S(O₂)-, and having 2 to 30 carbon atoms, a linear or branched, aliphatic or cycloaliphatic hydrocarbon radical with or without double bonds, which is terminally functionalized by OH, OR', NH₂, N(H)R', or N(R')₂ (where R' is a C₁- to C₃₀-alkyl radical with or without double bonds) and has 1 to 30 carbon atoms, or a polyether -(R⁵-O)ₙ-R⁶ of blockwise or random construction,
where
R⁵ is a linear or branched hydrocarbon radical containing 2 to 4 carbon atoms,
n is 1 to 100, and
R⁶ is hydrogen, a linear or branched aliphatic hydrocarbon radical with or without double bonds and having 1 to 30 carbon atoms, a cycloaliphatic hydrocarbon radical with or without double bonds and having 5 to 40 carbon atoms, an aromatic hydrocarbon radical having 6 to 40 carbon atoms, an alkylaryl radical having 7 to 40 carbon atoms, or a radical -C(O)-R⁷, where
R⁷ is a linear or branched aliphatic hydrocarbon radical with or without double bonds and having 1 to 30 carbon atoms, a cycloaliphatic hydrocarbon radical with or without double bonds and having 5 to 40 carbon atoms, an aromatic hydrocarbon radical having 6 to 40 carbon atoms or an alkylaryl radical having 7 to 40 carbon atoms
as secondary dispersants is used as dispersant.

2. Process according to Claim 1, **characterized in that** cations are used which derive from saturated or unsaturated cyclic compounds and also from aromatic compounds having in each case at least one trivalent nitrogen atom in a 4- to 10-membered heterocyclic ring of the general formulae (5), (6) and (7), it being possible for the heterocyclic rings to contain further heteroatoms if desired 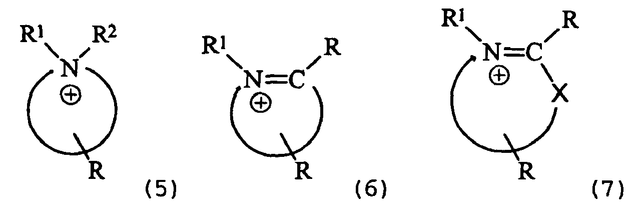 and where
R¹ and R² are as defined above,
R can be a hydrogen, a linear or branched aliphatic hydrocarbon radical with or without double bonds and having 1 to 30 carbon atoms, a cycloaliphatic hydrocarbon radical with or without double bonds and having 5 to 40 carbon atoms, an aromatic hydrocarbon radical having 6 to 40 carbon atoms or an alkylaryl radical having 7 to 40 carbon atoms, and
X can be an oxygen atom, a sulphur atom or a substituted nitrogen atom (X = O, S, NR¹).

3. Process according to at least one of Claims 1 to 2, **characterized in that** cations of the general formula (8) are used 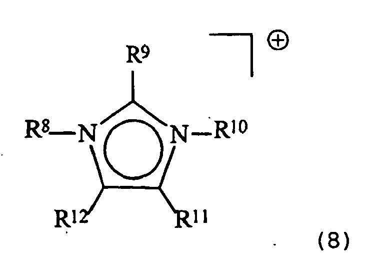 in which
R⁸, R⁹, R¹⁰, R¹¹, R¹² are identical or different and are hydrogen, a linear or branched aliphatic hydrocarbon radical with or without double bonds and having 1 to 30 carbon atoms, a cycloaliphatic hydrocarbon radical with or without double bonds and having 5 to 40 carbon atoms, an aromatic hydrocarbon radical having 6 to 40 carbon atoms, an alkylaryl radical having 7 to 40 carbon atoms, a linear or branched aliphatic hydrocarbon radical with or without double bonds, interrupted by one or more heteroatoms (oxygen, NH, NR' where R' is a C₁ to C₃₀ alkyl radical with or without double bonds) and having 1 to 30 carbon atoms, a linear or branched aliphatic hydrocarbon radical with or without double bonds, interrupted by one or more functionalities selected from the group consisting of -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, and -N(CH₃)-S(O₂)-, and having 1 to 30 carbon atoms, a linear or branched, aliphatic or cycloaliphatic hydrocarbon radical with or without double bonds, which is terminally functionalized by OH, OR', NH₂, N(H)R', or N(R')₂ (where R' is a C₁- to C₃₀-alkyl radical with or without double bonds) and has 1 to 30 carbon atoms, or a polyether - (R⁵-O)ₙ-R⁶ of blockwise or random construction,
where
R⁵ is a hydrocarbon radical containing 2 to 4 carbon atoms,
n is 1 to 100 and
R⁶ is hydrogen, a linear or branched aliphatic hydrocarbon radical with or without double bonds and having 1 to 30 carbon atoms, a cycloaliphatic hydrocarbon radical with or without double bonds and having 5 to 40 carbon atoms, an aromatic hydrocarbon radical having 6 to 40 carbon atoms, an alkylaryl radical having 7 to 40 carbon atoms, or a radical -C(O)-R⁷, where
R⁷ is a linear or branched aliphatic hydrocarbon radical with or without double bonds and having 1 to 30 carbon atoms, a cycloaliphatic hydrocarbon radical with or without double bonds and having 5 to 40 carbon atoms, an aromatic hydrocarbon radical having 6 to 40 carbon atoms or an alkylaryl radical having 7 to 40 carbon atoms.

4. Process according to at least one of Claims 1 to 3, **characterized in that** the ionic liquids used in the process of the invention contain an anion selected from the group consisting of halides, bis(perfluoroalkylsulphonyl)amides, alkyl and aryl tosylates, perfluoroalkyl tosylates, nitrates, sulphates, hydrogensulphates, alkyl and aryl sulphates, polyether sulphates and polyethersulphonates, perfluoroalkyl sulphates, sulphonates, alkyl and arylsulphonates, perfluorinated alkyl- and arylsulphonates, alkyl- and arylcarboxylates, perfluoroalkylcarboxylates, perchlorates, tetrachloroaluminates and saccharinates, preferably anions of the compounds dicyanamide, tetrafluoroborate, hexafluorophosphate, phosphate and polyether phosphates.

5. Process according to at least one of Claims 1 to 4, **characterized in that** the ionic liquids contain a cation selected from the group (1) and/or (7) and an alkyl sulphate as anion.

6. Process according to at least one of Claims 1 to 5, **characterized in that** mixtures of two or more ionic liquids composed of cations of the general formulae (1) to (8) each in combination with at least one anion are used.

7. Process according to at least one of Claims 1 to 6, wherein the amount of added ionic liquid is in the range from 0.1% to 98%, preferably from 0.1% to 20%, more preferably 0.3% to 5% by weight, based on the total formulation.

8. Aqueous, solvent-borne and pigment-containing pastes, inks, paints, coverings, coatings and coating materials, prepared in a first step by to processes known per se and subsequent addition of ionic liquids according to Claim 1 as secondary dispersants in an amount sufficient to achieve the synergistic effect.

9. Aqueous, solvent-borne and pigment-containing pastes, inks, paints, coverings, coatings and coating materials prepared by previous preparation of synergistic mixtures of
a) primary dispersants and ionic liquids according to Claim 1
b) addition of this mixture to at least one of the two coinponents
b1) pigment pastes
b2) inks, paints, coverings, coatings or coating materials in an amount sufficient to achieve the synergistic effect.

## Revendications

1. Procédé pour teindre des pâtes, des peintures, des laques, des recouvrements, des revêtements, des enduits contenant des solvants organiques avec utilisation de pâtes pigmentaires aqueuses contenant de l'eau, des pigments et des dispersants, **caractérisé en ce qu'**on utilise comme dispersants une combinaison synergique
a) de dispersants primaires usuels et
b) de liquides ioniques qui sont constitués par au moins un cation des formules générales (1) à (4) :
R¹R²R³R⁴N⁺ (1)
R¹R²N⁺=CR³R⁴ (2)
R¹R²R³R⁴P⁺ (3)
R¹R²P⁺=CR³R⁴ (4)
dans lesquelles
R¹, R² R³, R⁴ sont identiques ou différents et représentent hydrogène, un radical hydrocarboné aliphatique linéaire ou ramifié, contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone, un radical alkylaryle comprenant 7 à 40 atomes de carbone, un radical hydrocarboné aliphatique linéaire ou ramifié, contenant le cas échéant des doubles liaisons, interrompu par un ou plusieurs hétéroatomes (oxygène, NH, NR' avec R' représentant un radical alkyle en C₁ à C₃₀ contenant le cas échéant des doubles liaisons) comprenant 2 à 30 atomes de carbone, un radical hydrocarboné aliphatique, linéaire ou ramifié, contenant le cas échéant des doubles liaisons, interrompu par une ou plusieurs fonctionnalités, choisies dans le groupe -O-C(O)-, -(O)C-O-, -NH-C(O)-, -(O)C-NH, - (CH₃)N-C(O) -, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, comprenant 2 à 30 atomes de carbone, un radical hydrocarboné cycloaliphatique ou aliphatique linéaire ou ramifié, contenant le cas échéant des doubles liaisons, fonctionnalisé en position terminale par OH, OR', NH₂, N(H)R', N(R')₂ (avec R' représentant un radical alkyle en C₁ à C₃₀ contenant le cas échéant des doubles liaisons) comprenant 1 à 30 atomes de carbone ou un polyéther à blocs ou statistique selon -(R⁵-O)ₙ-R⁶,
R⁵ signifiant un radical hydrocarboné linéaire ou ramifié comprenant 2 à 4 atomes de carbone,
n valant 1 à 100 et
R⁶ représentant hydrogène, un radical hydrocarboné aliphatique, linéaire ou ramifié, contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone, un radical alkylaryle comprenant 7 à 40 atomes de carbone ou un radical -C(O)-R⁷ avec
R⁷ représentant un radical hydrocarboné aliphatique linéaire ou ramifié contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone, un radical alkylaryle comprenant 7 à 40 atomes de carbone comme dispersants secondaires.

2. Procédé selon la revendication 1, **caractérisé en ce qu'**on utilise des cations qui sont dérivés de composés cycliques saturés ou insaturés, ainsi que de composés aromatiques comprenant à chaque fois au moins un atome d'azote trivalent dans un hétérocycle de 4 à 10 chaînons, de formules générales (5), (6) et (7), les hétérocycles pouvant le cas échéant contenir d'autres hétéroatomes 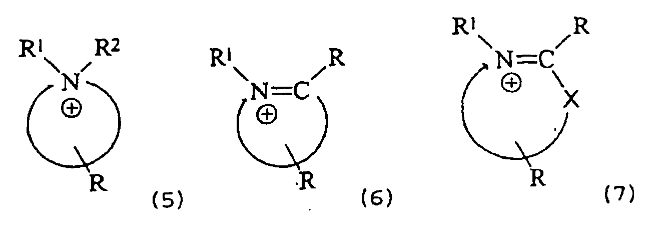 et dans lesquelles
R¹ et R² ont la signification susmentionnée,
R représente hydrogène, un radical hydrocarboné aliphatique linéaire ou ramifié contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone ou un radical alkylaryle comprenant 7 à 40 atomes de carbone et
X représente un atome d'oxygène, un atome de soufre ou un atome d'azote substitué (X = O, S, NR¹).

3. Procédé selon au moins la revendication 1 ou 2, **caractérisé en ce qu'**on utilise conjointement des cations de formule générale (8) 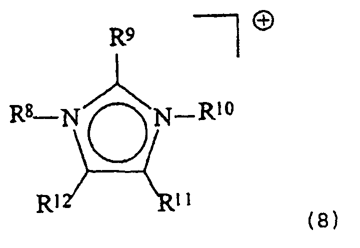 dans laquelle
R⁸, R⁹, R¹⁰, R¹¹ R¹² sont identiques ou différents et représentent hydrogène, un radical hydrocarboné aliphatique linéaire ou ramifié contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone, un radical alkylaryle comprenant 7 à 40 atomes de carbone, un radical hydrocarboné aliphatique linéaire ou ramifié, contenant le cas échéant des doubles liaisons, interrompu par un ou plusieurs hétéroatomes (oxygène, NH, NR' avec R' représentant un radical alkyle en C₁ à C₃₀ contenant le cas échéant des doubles liaisons) comprenant 1 à 30 atomes de carbone, un radical hydrocarboné aliphatique linéaire ou ramifié, contenant le cas échéant des doubles liaisons, interrompu par une ou plusieurs fonctionnalités, choisies dans le groupe -O-C(O)-, -(O)C-O-, -NH-C(O)-, - (O) C-NH, - (CH₃)N-C(O) -, - (O) C-N(CH₃) -, -S(O₂) -O-, -O-S(O₂)-, -S(O₂)-NH-, -NH- S(O₂)-, -S(O₂)-N(CH₃)-, -N(CH₃)-S(O₂)-, comprenant 1 à 30 atomes de carbone, un radical hydrocarboné cycloaliphatique ou aliphatique linéaire ou ramifié, contenant le cas échéant des doubles liaisons, fonctionnalisé en position terminale par OH, OR', NH₂, N(H)R', N(R')₂ (avec R' représentant un radical alkyle en C₁ à C₃₀ contenant le cas échéant des doubles liaisons), comprenant 1 à 30 atomes de carbone ou un polyéther à blocs ou statistique constitué par - (R⁵-O)ₙ-R⁶,
où
R⁵ représente un radical hydrocarboné comprenant 2 à 4 atomes de carbone, n vaut 1 à 100 et
R⁶ représente hydrogène, un radical hydrocarboné aliphatique linéaire ou ramifié, contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone, un radical alkylaryle comprenant 7 à 40 atomes de carbone ou un radical -C(O)-R⁷ avec
R⁷ représentant un radical hydrocarboné aliphatique linéaire ou ramifié contenant le cas échéant des doubles liaisons, comprenant 1 à 30 atomes de carbone, un radical hydrocarboné cycloaliphatique contenant le cas échéant des doubles liaisons, comprenant 5 à 40 atomes de carbone, un radical hydrocarboné aromatique comprenant 6 à 40 atomes de carbone, un radical alkylaryle comprenant 7 à 40 atomes de carbone.

4. Procédé selon au moins l'une quelconque des revendications 1 à 3, **caractérisé en ce que** les liquides ioniques utilisés dans le procédé selon l'invention contiennent un anion choisi dans le groupe des halogénures, des bis(perfluoroalkylsulfonyl)amides, des alkyltosylates et des aryltosylates, des perfluoroalkyltosylates, des nitrates, des sulfates, des hydrogénosulfates, des alkylsulfates et des arylsulfates, des polyéthersulfates et des polyéthersulfonates, des perfluoroalkylsulfates, des sulfonates, des alkylsulfonates et des arylsulfonates, des alkylsulfonates et des arylsulfonates perfluorés, des alkylcarboxylates et des arylcarboxylates, des perfluoroalkylcarboxylates, des perchlorates, des tétrachloroaluminates, des saccharinates, de préférence des anions des composés dicyanamide, tétrafluoroborate, hexafluorophosphate, phosphate et polyétherphosphates.

5. Procédé selon au moins l'une quelconque des revendications 1 à 4, **caractérisé en ce que** les liquides ioniques contiennent un cation choisi dans le groupe (1) et/ou (7) et un alkylsulfate comme anion.

6. Procédé selon au moins l'une quelconque des revendications 1 à 5, **caractérisé en ce qu'**on utilise des mélanges d'au moins deux liquides ioniques ou plus constitués par des cations des formules générales (1) à (8), à chaque fois combinés avec au moins un anion.

7. Procédé selon au moins l'une quelconque des revendications 1 à 6, **caractérisé en ce que** la quantité de liquide ionique ajouté se situe dans la plage de 0,1 à 98% en poids, de préférence de 0,1 à 20% en poids, de manière particulièrement préférée de 0,3 à 5% en poids par rapport à la formulation totale.

8. Pâtes, peintures, laques, recouvrements, revêtements et enduits aqueux, contenant des solvants et des pigments, préparés dans une première étape par des procédés connus en soi et par une addition consécutive de liquides ioniques selon la revendication 1 comme dispersants secondaires en une quantité suffisante pour déployer l'effet synergique.

9. Pâtes, peintures, laques, recouvrements, revêtements et enduits aqueux, contenant des solvants et des pigments, préparés par une préparation préalable de mélanges synergiques constitués par
a) des dispersants primaires et des liquides ioniques selon la revendication 1 et
b) addition de ce mélange à au moins un des deux composants
b1) pâtes pigmentaires
b2) peintures, laques, recouvrements, matériaux de revêtement, enduits, en une quantité suffisante pour déployer l'effet synergique.
